# EUROPEAN PATENT SPECIFICATION

(11) **EP 3 491 076 B1**
(45) Date of publication and mention of the grant of the patent: **07.06.2023**
(21) Application number: 17754618.1
(22) Date of filing: 27.07.2017
(51) Int. Cl.: C09D 5/08, C08G 73/02

(54) **A METHOD OF SYNTHESIS OF AN ANTI-CORROSION ADDITIVE TO ORGANIC COATING COMPOSITIONS AND AN ORGANIC COATING COMPOSITION WITH AN ANTI-CORROSION ADDITIVE**
VERFAHREN ZUR HERSTELLUNG EINES KORROSIONSSCHUTZADDITIVS FÜR ORGANISCHE BESCHICHTUNGSZUSAMMENSETZUNGEN UND ORGANISCHE BESCHICHTUNGSZUSAMMENSETZUNG MIT EINEM KORROSIONSSCHUTZADDITIV
PROCÉDÉ DE SYNTHÈSE D'UN ADDITIF ANTICORROSION POUR COMPOSITIONS DE REVÊTEMENT ORGANIQUES, ET COMPOSITION DE REVÊTEMENT ORGANIQUE CONTENANT UN ADDITIF ANTICORROSION

(30) Priority: 28.07.2016 PL 41812116
(43) Date of publication of application: 05.06.2019
(73) Proprietor: NANOPURE Sp. z o.o., 02-676 Warszawa (PL)
(72) Inventor: SZYMANSKI, Wojciech, 52-433 Wroclaw (PL)
(74) Representative: Kancelaria Eupatent.pl Sp. z.o.o
(86) International application number: PCT/EP2017/068963
(87) International publication number: WO 2018/019923

(56) References cited:
- EP-A1- 2 960 302
- EP-B1- 2 193 158
- UFANA RIAZ ET AL: "Recent advances in corrosion protective composite coatings based on conducting polymers and natural resource derived polymers", PROGRESS IN ORGANIC COATINGS, vol. 77, no. 4, 1 April 2014 (2014-04-01), pages 743-756, XP055425157, NL ISSN: 0300-9440, DOI: 10.1016/j.porgcoat.2014.01.004

## Description

### BACKGROUND

### TECHNICAL FIELD

The present disclosure relates to synthesis of an anti-corrosion additive to organic coating compositions and an organic coating composition with an anti-corrosion additive, for use with corrosive surfaces.

### BACKGROUND

There are known anti-corrosion additives to organic coating compositions which are based on conductive polymers. One of the polymers with conductive properties is polyaniline (PANI), which can have several forms differing in a degree of oxidation. Chemical forms of polyaniline which has conductive properties, also anticorrosive, are emeraldine salts (partially oxidized form of polyaniline).

A typical process of synthesis of polyaniline with conductive properties consists of transferring aniline to a salt that is well soluble in water, for example by using a hydrochloric acid and performing a main polymerization reaction with the use of chemical initiator. The synthesis of polyaniline runs through a radical-based mechanism. The polymerization reaction is accompanied by oxidation of parts of the polymer chain to a quinoid chain. The product of this reaction could be considered both as an aromatic compound doped with "holes" quinoid parts and as a quinoid compound doped with "excess" aromatic parts, because the obtained reaction form of the polyaniline - the emeraldine - contains equal amounts of oxidized and reduced forms. This form of polyaniline has no conductive properties. In order to obtain conductive properties, the synthesized polyaniline (emeraldine) is converted into an emeraldine salt.

There are known various processes of synthesis of polyaniline salts with conductive properties.

A US patent application US2006134339 discloses a method of synthesis of hybrid organic-inorganic compound of polyaniline as PANI phosphomolybdate, which is obtained by polymerization of aniline monomer with phosphomolybdic acid. This technique is based on obtaining, based on a known method, a polyaniline chloride by the process of deprotonation of obtained salt in ammonia solution in order to get a base form of polyaniline and substituted by phosphomolybdate ion chain of PANI in phosphomolybdic acid solution. US20060134339 also discloses the use of PANI phosphomolybdate as an anti-corrosion pigment which increases anticorrosive properties of organic films.

A Polish patent application PL408664 discloses a method of synthesis of PANI heptamolybdate. In this case, 5,11 g of aniline is added to a water solution (cooled with ice) of an acid selected from the group consisting of orthophosphoric(V) acid (at a concentration from 0,1 to 6 M), hydrochloric acid, fluoric acid, nitric(V) acid and sulfuric acid (all of them at a concentration from 0,1 to 8 M), with ammonium persulfate as oxidant in amount from 10 to 20 g and phosphomolybdate tetrahydrate. The cooled solution is mixed for at least one hour and then left in an ambient temperature for at least 4 hours. After sedimentation, a dark green precipitate, which is the reaction product, is filtered off and washed with distilled water until the filtrate become colourless. Then the precipitate is dried at 378 K for at least 8 hours. The product of this process: PANI heptamolybdate is used as an anti-corrosion additive for epoxy resins and water-soluble epoxy paints, polyvinyl paints, acrylic paints and two-component solvent paints. This solution is characterized by a high efficiency of forming the hybrid compound of polyaniline and a short time of reaction.

The publication "Recent Advances in Corrosion Protective Composite Coatings Based on Conducting Polymers and Nature Resource Derived Polymers" by Rias et al. (Prog. Org. Coat, 2014, 77, p. 743-756) discloses a process of using conjugated conductive polymers as pigments to increase anticorrosive properties of organic coatings.

The publication "Biosensor based on polyaniline-Prussian Blue/multi-walled carbon nanotubes hybrid composites" by Y. Zou et al (Biosensors and Bioelectronics 22 (2007) p. 2669-2674) discloses a method of producing biosensors, for example glucose sensors. The biosensor material is made of organic-inorganic polyaniline composite with prussian plue (PANI-PB). However, this publication does not suggest the use of polyaniline hexacyanoferrate (III) or polyaniline silicate, nor does it suggest the addition of iron (III) ions. Moreover, it concerns the use of the materials obtained as biosensors and not as an additive for anti-corrosion coatings.

The publication "Performance evaluation of polyaniline pigmented epoxy coating for corrosion protection of steel in a concrete environment" by K. Saravanan et al. (Progress in Organic Coatings 59 (2007) p. 160-167) discloses a method of producing an epoxy resin based pigmented anticorrosive coating with addition of polyaniline. Polyaniline was obtained by oxidizing polymerization with the use of ammonium persulfate as an oxidant in an acid medium at about 0° C. In the described embodiment, the emeraldine salt is obtained as the final product and not the polyaniline (III) hexacyanoferrate nor polyaniline silicate. In addition, this document does not suggest the addition of iron (III) ions during the synthesis to increase the conductivity of the obtained product.

Because of high stability and low production cost, polyaniline compounds, in particular polyaniline salts substituted with strong mineral acids and polyaniline (PANI) substituted with different inorganic ions, are used as anticorrosive pigments in various organic coating compositions.

A Polish patent application PL408664 discloses a process for preparation of additives for anti-corrosion coatings based on hybrid polyaniline compounds. The final product is polyaniline heptamolybdate, but not the polyaniline (III) hexacyanoferrate nor polyaniline silicate, and the ammonium heptamolybdate is used as a substrate for its synthesis. In addition, this document does not suggest the addition of iron (III) ions during the synthesis to increase the conductivity of the obtained product.

The publications cited above indicate that the process of synthesis of polyaniline (PANI) hybrid compounds for use as an anti-corrosion additive is under development, in order to increase efficiency of the process of synthesis of PANI hybrid compounds and create new or modified PANI hybrid compounds.

There is, therefore, a need to provide an anti-corrosion additive from a group of hybrids PANI compounds having improved anticorrosive properties as compared with currently used hybrid PANI compounds and provide an organic coating composition with addition of hybrid PANI compounds having improved anticorrosive properties.

### SUMMARY

There is disclosed a method of synthesis of an anti-corrosion additive to organic coating compositions, comprising and an organic composition containing the anti-corrosion additive according to the appended claims.

### BRIEF DESCRIPTION OF FIGURES

The invention is shown by means of example embodiments on a drawing, wherein:
Fig. 1 shows schematically a method of preparation of an anti-corrosion additive for an organic coating composition according to the invention.
Fig. 2 shows a table comparing tests results of alkyd coatings with anti-corrosion additive in a salt chamber with soluble SO₂ atmosphere after 32 daily test cycles.
Fig. 3 shows a table comparing tests results of alkyd coatings with anti-corrosion additive in a salt chamber after 240 hours of test.

### DETAILED DESCRIPTION

Anti-corrosion additives according to the invention are polyaniline hybrid compounds selected from the group consisting of polyaniline hexacyanoferrate (III) and polyaniline silicate.

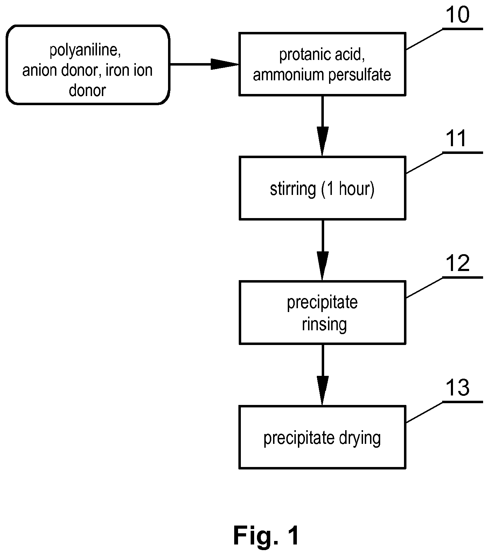

Fig. 1 shows schematically a method of preparation of polyaniline hybrid compounds according to the invention. In the first step (10), to a cooled water solution containing:
- an acid selected from the group consisting of orthophosphoric acid, sulphuric (VI) acid, nitric(V) acid, hydrochloric acid, fluoric acid, chloric (VII) acid in concentration in the solution from 0,1 to 8 M;
- at least one oxidant selected from the group consisting of ammonium persulfate and hydrogen peroxide;
- and iron(III) ions in concentration in the solution from 0,05 to 0,15 M;
there are added:
- aniline in a weight ratio aniline:oxidant from 1:1,25 to 1:5 (preferably, 1:2,5) and
- anions donors selected from the group consisting of hexacyanoferrates (III) ([Fe(CN)_{6]}³⁻) and silicates (SiO₃²), with anions donor:aniline weight ratio less or equal to 0,1:1.

The hybrid PANI compound in the composition can be selected from the group consisting of: PANI hexacyano ferrate (III) and PANI silicate, and wherein the hybrid PANI compound is introduced as a pigment while preparing the organic coating composition.

The hybrid PANI compound can be introduced to the organic coating composition through the emulsification with the pigment.

### BRIEF DESCRIPTION OF FIGURES

The invention is shown by means of example embodiments on a drawing, wherein:
Fig. 1 shows schematically a method of preparation of an anti-corrosion additive for an organic coating composition according to the invention.

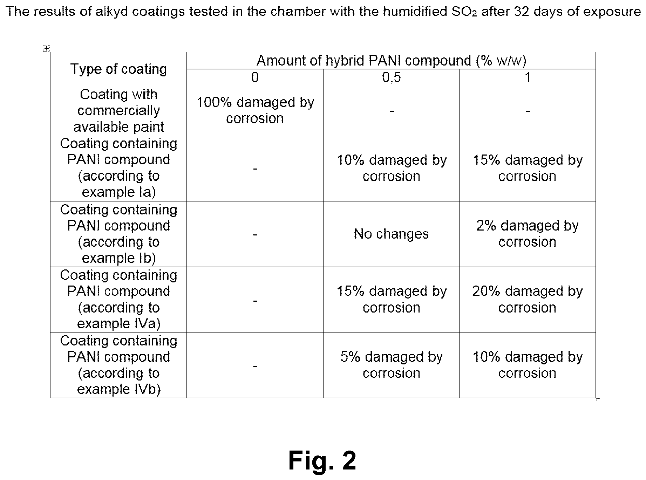

Fig. 2 shows a table comparing tests results of alkyd coatings with anti-corrosion additive in a salt chamber with soluble SO₂ atmosphere after 32 daily test cycles.

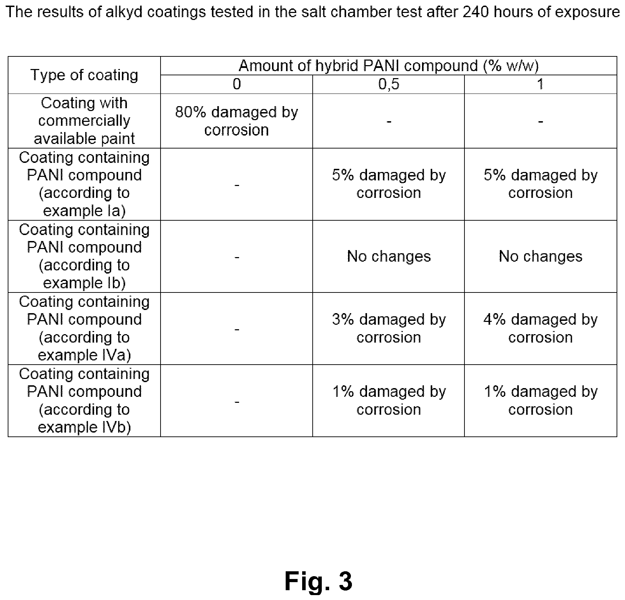

Fig. 3 shows a table comparing tests results of alkyd coatings with anti-corrosion additive in a salt chamber after 240 hours of test.

### DETAILED DESCRIPTION

Anti-corrosion additives according to the invention are polyaniline hybrid compounds selected from the group consisting of polyaniline hexacyanoferrate (III) and polyaniline silicate.

Fig. 1 shows schematically a method of preparation of polyaniline hybrid compounds according to the invention. In the first step (10), to a cooled water solution containing:
- an acid selected from the group consisting of orthophosphoric acid, sulphuric (VI) acid, nitric(V) acid, hydrochloric acid, fluoric acid, chloric (VII) acid in concentration in the solution from 0,1 to 8 M;
- at least one oxidant selected from the group consisting of ammonium persulfate and hydrogen peroxide;
- and iron(III) ions in concentration in the solution from 0,05 to 0,15 M;
there are added:
- aniline in a weight ratio aniline:oxidant from 1:1,25 to 1:5 (preferably, 1:2,5) and
- anions donors selected from the group consisting of hexacyanoferrates (III) ([Fe(CN)_{6]}³⁻) and silicates (SiO₃²⁻), with anions donor:aniline weight ratio less or equal to 0,1:1.

Preferably, the reaction mixture has orthophosphoric (V) acid concentration from 0,1 to 6 M or for protonic acids selected from the group consisting of hydrochloric acid, fluoric acid, nitric(V) acid and sulfuric (VI) acid. Preferably, the concentration of acids in the reaction mixture is from 0,1 to 8 M.

The reaction mixture as described above is mixed in step 11 for the time necessary to obtain a precipitate which is the reaction product and is a polyaniline hybrid compound. Preferably, the reaction mixture is mixed for an hour. After the end of the reaction, the precipitate is washed in step 12 with distilled water until the filtrate becomes colourless and it is dried in step 13. For example, precipitate can be dried in a temperature from 60 to 120 °C for 5 to 12 hours.

The reaction product is a polyaniline hybrid compound selected from the group consisting of polyaniline hexacyanoferrate (III) and polyaniline silicate depending on the anion ([Fe(CN)_{6]}³⁻ or SiO₃²⁻) added to the reaction mixture in step 10.

The addition, to the reaction mixture, of iron(III) ions in concentration from 0,05 to 0,15 M allows to obtain in the reaction polyaniline hybrid compounds as PANI hexacyanoferrate (III) and PANI silicate, which have a low electric resistance - even up to a few orders of magnitude (measured in Ω·m). As a results, the obtained compounds have a higher anticorrosive efficiency as compared to polyaniline compounds synthesized by the well-known method (without addition of iron(III) ions (Fe³⁺)).

The hybrid polyaniline compounds synthesized according to the invention can be used as anticorrosion additives in various organic coating compositions, such as paints, primers, enamels or lacquers and in particular in organic coating compositions selected from group consisting of: polyvinyl binder, alkyd binder, acrylic binder and epoxy binder.

Polyaniline hybrid compounds made by the method according to the invention can be added to organic film forming compositions as an anticorrosive pigment, preferably in a concentration from 0,1 to 5 % in weight to weight ratio in relation to the total organic compound mass. Preferably, the polyaniline hybrid compounds are added to the coating composition in the same way as pigments, by emulsification in a binder, during preparation of the coating composition.

### EXAMPLES OF PREPARATION THE ANTI-CORROSION ADDITIVE

### Example I

### a) Blind test (synthesis of PANI hexacyanoferrate (III) without addition of iron (III) ions)

6 g of potassium hexacyanoferrate (III) (which is an anion donor: [Fe(CN)_{6]}³⁻) and 20 g of aniline were added to 300 ml of aqueous solution cooled with ice water containing 1 M of dissolved hydrochloric acid and 50 g of dissolved ammonium persulfate. Iron (III) ions were not added.

The reaction mixture was stirred for one hour. Then the mixture with the precipitate was left for 4 hours at an ambient temperature. Then the precipitate was filtered, rinsed with distilled water and dried at 80°C for 8 hours. The weight of the obtained product was 22,12 g. Then the resistance of the compressed sample was determined (according to the van der Pauw method): 11,34 Ω·m.

### b) Preparation of PANI hexacyanoferrate (III) according to the invention with addition of iron (III) ions (Fe³⁺):

A sample of PANI hexacyanoferrate (III) was prepared as described above (example Ia), but 6,5 g of iron(III) chloride hexahydrate (FeCl₃·6H₂O) was added, and therefore the concentration of iron ions (Fe³⁺) in the reaction mixture was obtained at 0,08 M. The reaction mixture was stirred for one hour. Then the mixture was left for 4 hours, the precipitate was filtered, rinsed with distilled water and dried at 80°C for 8 hours. The weight of the obtained product was 28,56 g. Then the resistance of the compressed sample was determined (according to the Van der Pauw method): 0,0026 Ω·m.

The comparison of the results of the obtained resistance values clearly shows that the addition of iron (III) ions (Fe³⁺) to the reaction mixture significantly reduces the resistance of the product, i.e. the PANI hexacyanoferrate (III).

### Example II

### a) Blind test (synthesis of PANI hexacyanoferrate (III) without addition of iron (III) ions)

To the 300 ml of aqueous solution cooled with ice water containing 1 M of dissolved nitric(V) acid and 50 g of dissolved ammonium persulfate 6 g of potassium hexacyanoferrate (III) (which is an anion donor: [Fe(CN)_{6]}³⁻) and 20 g of aniline were added. Iron (III) ions were not added.

The reaction mixture was stirred for one hour. Then the mixture with the precipitate was left for 4 hours at an ambient temperature. Then the precipitate was filtered, rinsed with distilled water and dried at 80°C for 8 hours. The weight of the obtained product was 22,78 g. Then the resistance of the compressed sample was determined (according to the van der Pauw method): 14,11 Ω·m.

### b) Preparation of PANI hexacyanoferrate (III) according to invention with addition of iron (III) ions (Fe³⁺):

Subsequently the sample of PANI hexacyanoferrate (III) was prepared as described above (example IIa), but 9,75 g of iron(III) nitrate nonahydrate (Fe(NO₃)₃^{∗}9H₂O) was added and the concentration of iron ions (Fe³⁺) in the reaction mixture was obtained (0,08 M). The reaction mixture was stirred for one hour. Then the mixture was left for 4 hours, the precipitate was filtered, rinsed with distilled water and dried at 80°C for 8 hours. The weight of the obtained product was 22,92 g. Then the resistance of the compressed sample was determined (according to the Van der Pauw method): 0,0032 Ω·m.

The comparison of the results of the obtained resistance values clearly shows that the addition of iron (III) ions (Fe³⁺) to the reaction mixture significantly reduces the resistance of the product, i.e. the PANI hexacyanoferrate (III).

### Example III

### a) Blind test (synthesis of PANI hexacyanoferrate (III) without addition of iron (III) ions)

To the 300 ml of aqueous solution cooled with ice water containing 0,5 M of dissolved sulfuric (VI) acid and 50 g of dissolved ammonium persulfate 6 g of potassium hexacyanoferrate (III) (which is an anion donor: [Fe(CN)_{6]}³⁻) and 20 g of aniline were added. Iron (III) ions were not added.

The reaction mixture was stirred for one hour. Then the mixture with the precipitate was left for 4 hours at ambient temperature. Then the precipitate was filtered, rinsed with distilled water and dried at 80°C for 8 hours. The weight of the obtained product was 23,16 g. Then the resistance of the compressed sample was determined (according to the van der Pauw method): 13,76 Ω·m.

### b) Preparation of PANI hexacyanoferrate (III) according to the invention with addition of iron (III) ions (Fe³⁺):

Subsequently the sample of PANI hexacyanoferrate (III) was prepared as described above (example IIIa), but 6,35 g of iron (III) sulfate heptahydrate (Fe₂(SO₄)₃·7H₂O) was added and the concentration of iron ions (Fe³⁺) in the reaction mixture was obtained (0,08 M). The reaction mixture was stirred for one hour. Then the mixture was left for 4 hours, the precipitate was filtered, rinsed with distilled water and dried at 80°C for 8 hours. The weight of the obtained product was 30,43 g. Then the resistance of the compressed sample was determined (according to the Van der Pauw method): 0,0041 Ω·m.

The comparison of the results of the obtained resistance values clearly shows that the addition of iron (III) ions (Fe³⁺) to the reaction mixture significantly reduces the resistance of the product, i.e. the PANI hexacyanoferrate (III).

### Example IV

### a) Blind test (synthesis of PANI silicate without addition of iron (III) ions)

To the 300 ml of aqueous solution cooled with ice water containing 1M of dissolved hydrochloric acid and 50 g of dissolved ammonium persulfate 20 ml of sodium silicate containing 35% w/w Na₂SiO₃ (which is an anion donor: SiO₃²⁻) and 20 g of aniline were added. Iron (III) ions were not added.

The reaction mixture was stirred for one hour. Then the mixture with the precipitate was left for 4 hours at ambient temperature. Then the precipitate was filtered, rinsed with distilled water and dried at 80°C for 8 hours. The weight of the obtained product was 21,58 g. Then the resistance of the compressed sample was determined (according to the van der Pauw method): 0,0499 Ω·m.

### b) Preparation of PANI silicate according to the invention with addition of iron (III) ions (Fe³⁺):

Subsequently the sample of PANI silicate was prepared as described above (example IVa), but that 6,5 g of iron (III) chloride hexahydrate (FeCl₃·6H₂O) was added and the concentration of iron ions (Fe³⁺) in the reaction mixture was obtained (0,05 M). The reaction mixture was stirred for one hour. Then the mixture was left for 4 hours, the precipitate was filtered, rinsed with distilled water and dried at 80°C for 8 hours. The weight of the obtained product was 30,10 g. Then the resistance of the compressed sample was determined (according to the Van der Pauw method): 0,0076 Ω·m.

The comparison of the results of the obtained resistance values clearly shows that the addition of iron (III) ions (Fe³⁺) to the reaction mixture significantly reduces the resistance of the product, i.e. the PANI silicate.

### Example V

### a) Blind test (synthesis of PANI silicate without addition of iron (III) ions)

To the 300 ml of aqueous solution cooled with ice water containing 1M of dissolved nitric acid and 50 g of dissolved ammonium persulfate 20 ml of sodium silicate containing 35% w/w Na₂SiO₃ (which is an anion donor: SiO₃²⁻) and 20 g of aniline were added. Iron (III) ions were not added.

The reaction mixture was stirred for one hour. Then the mixture with the precipitate was left for 4 hours at ambient temperature. Then the precipitate was filtered, rinsed with distilled water and dried at 80°C for 8 hours. The weight of the obtained product was 20,86 g. Then the resistance of the compressed sample was determined (according to the van der Pauw method): 0,0638 Ω·m.

### b) Preparation of PANI silicate according to the invention with addition of iron (III) ions (Fe³⁺):

Subsequently the sample of PANI silicate was prepared as described above (example Va), but 6,5 g of iron (III) chloride hexahydrate (FeCl₃·6H₂O) was added and the concentration of iron ions (Fe³⁺) in the reaction mixture was obtained (0,05 M). The reaction mixture was stirred for one hour. Then the mixture was left for 4 hours, the precipitate was filtered, rinsed with distilled water and dried at 80°C for 8 hours. The weight of the obtained product was 32,52 g. Then the resistance of the compressed sample was determined (according to the Van der Pauw method): 0,0052 Ω·m.

The comparison of the results of the obtained resistance values clearly shows that the addition of iron (III) ions (Fe³⁺) to the reaction mixture significantly reduces the resistance of the product, i.e. the PANI silicate.

### Example VI

### a) Blind test (synthesis of PANI silicate without addition of iron (III) ions)

To the 300 ml of aqueous solution cooled with ice water containing 1M of dissolved sulfuric (VI) acid and 50 g of dissolved ammonium persulfate 20 ml of sodium silicate containing 35% w/w Na₂SiO₃ (which is an anion donor: SiO₃²⁻) and 20 g of aniline were added. Iron (III) ions were not added.

The reaction mixture was stirred for one hour. Then the mixture with the precipitate was left for 4 hours at ambient temperature. Then the precipitate was filtered, rinsed with distilled water and dried at 80°C for 8 hours. The weight of the obtained product was 20,16 g. Then the resistance of the compressed sample was determined (according to the van der Pauw method): 0,0714 Ω·m.

### b) Preparation of PANI silicate according to the invention with addition of iron (III) ions (Fe³⁺):

Subsequently the sample of PANI silicate was prepared as described above (example VIa), but that 6,5 g of iron (III) chloride hexahydrate (FeCl₃·6H₂O) was added and the concentration of iron ions (Fe³⁺) in the reaction mixture was obtained (0,05 M). The reaction mixture was stirred for one hour. Then the mixture was left for 4 hours, the precipitate was filtered, rinsed with distilled water and dried at 80°C for 8 hours. The weight of the obtained product was 31,34 g. Then the resistance of the compressed sample was determined (according to the Van der Pauw method): 0,0064 Ω·m.

The comparison of the results of the obtained resistance values clearly shows that the addition of iron (III) ions (Fe³⁺) to the reaction mixture significantly reduces the resistance of the product, i.e. the PANI silicate.

### Example of preparation of anticorrosive paint

PANI silicate was emulsified in the amount of 0.5% w/w in the alkyd paint without zinc phosphate (V). The difference in the solid content resulting from the absence of zinc phosphate (V) was eliminated by the addition of barium sulfate.

To evaluate the anticorrosion properties of hybrid PANI compounds in the organic coating compositions, products obtained in examples Ia, Ib, IVa and IVb were used as an anticorrosive pigment in the alkyd paint. A commercially available alkyd paint containing zinc phosphate (V) in the amount of 10% and without hybrid PANI compounds (0% w/w) was used as a reference sample. In addition, the alkyd paint with the zinc phosphate (V) removed in the laboratory was used to prepare two samples:
- 1^{st} alkyd paint composition: commercially available alkyd paint without zinc phosphate (V) containing anticorrosive pigment in the amount of 0,5% w/w - according to the examples Ia, Ib, IVa and IVb,
- 2^{nd} alkyd paint composition: commercially available alkyd paint with zinc phosphate (V) removed, containing anticorrosive pigment in the amount of 1% w/w - according to the examples Ia, Ib, IVa and IVb.

Commercially available paint and the obtained alkyd paint compositions (1^{st} and 2^{nd}) were applied to the test panels according to PN-EN ISO 1514:2006. The thickness of the applied coatings was controlled by magnetic method according to PN-EN ISO 2808:2008. The thickness of all applied coatings was 40-50 µm. After the appropriate time of seasoning test panels coated with alkyd paint have been subjected to the comparative accelerated corrosion tests including salt chamber test, SO₂ chamber test, both according to PN-EN ISO 9227:2012 and PN-EN ISO 3231:2000. The damage level was determined according to PN-EN ISO 4628. The results are shown in Fig. 2 and Fig. 3.

The results shown in Fig. 2 (the results of alkyd coatings tested in the chamber with the humidified SO₂ after 32 days of exposure) and Fig. 3 (the results of alkyd coatings tested in the salt chamber test after 240 hours of exposure) confirmed the improvement of anticorrosive properties of alkyd paints containing both PANI hexacyanoferrate (III) and PANI silicate as anticorrosive pigments synthesised in the presence of iron (III) ions (Fe³⁺) (example Ib and IVb) in comparison to the same hybrid PANI compounds synthesised in the absence of iron (III) ions (Fe³⁺) (example Ia and IVa) and alkyd paints without anti-corrosion additive.

## Claims

1. A method of synthesis of an anti-corrosion additive to organic coating compositions, comprising preparing an aqueous reaction solution at a temperature lower than an ambient temperature, the aqueous reaction solution comprising:
- at least one acid selected from the group consisting of phosphoric (V) acid, sulfuric (VI) acid, nitric (V) acid, hydrochloric acid, hydrofluoric acid, perchloric acid having a total concentration in aqueous solution from 0,1 to 8 M;
- at least one oxidant selected from the group consisting of ammonium persulfate and hydrogen peroxide;
- aniline in the amount necessary to obtain the weight ratio of aniline:oxidant from 1:2,5 to 1:5;
- and an anion donor in the amount necessary to obtain the weight ratio of anion donor:aniline not less than 0,1:1;
**characterized by**:
- while preparing the aqueous reaction solution, introducing to the aqueous reaction solution:
- as the anion donor, a compound comprising anions selected from the group consisting of hexacyanoferrates (III) [Fe(CN)₆³⁻] and silicates (SiO₃²⁻),
- at least one compound being iron (III) ion (Fe³⁺) donor in the amount necessary to obtain the concentration of iron ions (Fe³⁺) in the reaction mixture in a range from 0,05 to 0,15 M;
- next, stirring the reaction mixture until the precipitate is precipitated;
- filtering and drying the precipitate;
- to obtain a product of the reaction which is a hybrid polyanilie (PANI) compound selected from the group consisting of PANI hexacyanoferrate (III) and PANI silicate.

2. The method according to claim 1, wherein the anion donor is a compound selected from the group consisting of potassium hexacyanoferrate (III) and potassium silicate.

3. The method according to claim 1 or 2, wherein the iron (III) ion (Fe³⁺) donor is a compound selected from the group consisting of iron (III) chloride hexahydrate (FeCl₃·6H₂O), iron (III) nitrate nonahydrate (Fe(NO₃)₃·9H₂O) and iron (III) sulfate heptahydrate (Fe₂(SO₄)₃·7H₂O).

4. The method according to any of previous claims, comprising use of phosphoric acid in the amount necessary to obtain the concentration in the reaction mixture ranging from 0,1 to 6,0 M.

5. The method according to any of previous claims, comprising use of ice water as a cooling agent.

6. The method according to any of previous claims, comprising carrying out the synthesis for one hour.

7. The method according to any of previous claims, comprising use of distilled water as a rinse agent to rinse the precipitate until the filtrate is colourless.

8. The method according to any of previous claims, wherein the temperature of the drying process is 80°C.

9. An organic coating composition **characterized in that** it contains a hybrid PANI compound selected from the group consisting of: PANI hexacyanoferrate (III) and PANI silicate wherein the hybrid PANI compound is obtainable by the method of any of claims 1-8.

10. The organic coating composition according to claim 9, comprising at least one hybrid PANI compound in the amount from 0,1 to 0,5% w/w with reference to the total weight of the organic coating composition.

11. The organic coating composition according to any of claims 9-10, having a form of a paint.

12. The organic coating composition according to any of claims 9-10, having a form of a varnish.

13. The organic coating composition according to any of claims 9-10, having a form of an enamel.

14. The organic coating composition according to any of claims 9-13, wherein the hybrid PANI compound is selected from the group consisting of PANI hexacyanoferrate (III) and PANI silicate, and wherein the hybrid PANI compound is introduced as a pigment while preparing the organic coating composition.

15. The organic coating composition according to claim 14, wherein the hybrid PANI compound is introduced to the organic coating composition through the emulsification with the pigment.

## Patentansprüche

1. Verfahren zur Synthese eines Korrosionsschutzadditivs für organische Beschichtungszusammensetzungen, umfassend Herstellen einer wässrigen Reaktionslösung bei einer Temperatur, die niedriger als eine Umgebungstemperatur ist, wobei die wässrige Reaktionslösung Folgendes umfasst:
- mindestens eine Säure, die ausgewählt ist aus der Gruppe bestehend aus: Phosphor(V)-säure, Schwefel(VI)-säure, Salpeter(V)-säure, Chlorwasserstoffsäure, Fluorwasserstoffsäure, Perchlorsäure mit einer Gesamtkonzentration in wässriger Lösung von 0,1 bis 8 M;
- mindestens ein Oxidationsmittel, das ausgewählt ist aus der Gruppe bestehend aus: Ammoniumpersulfat und Wasserstoffperoxid;
- Anilin in der Menge, die notwendig ist, um das Gewichtsverhältnis von Anilin:Oxidationsmittel von 1:2,5 bis 1:5 zu erlangen;
- und einen Anionendonor in der Menge, die notwendig ist, um das Gewichtsverhältnis von Anionendonor: Anilin von nicht weniger als 0,1:1 zu erlangen;
**gekennzeichnet durch**:
- während des Herstellens der wässrigen Reaktionslösung Einbringen von Folgendem in die wässrige Reaktionslösung:
- als der Anionendonor einer Verbindung, umfassend Anionen, die ausgewählt sind aus der Gruppe bestehend aus: Hexacyanoferraten(III) [Fe(CN)₆³⁻] und Silicaten (SiO₃²⁻);
- mindestens einer Verbindung, die ein Donor von Eisen(III)-Ionen (Fe³⁺) ist, in der Menge, die notwendig ist, um die Konzentration von Eisenionen (Fe³⁺) in dem Reaktionsgemisch in einem Bereich von 0,05 bis 0,15 M zu erlangen;
- als Nächstes Rühren des Reaktionsgemisches, bis das Präzipitat präzipitiert ist;
- Filtrieren und Trocknen des Präzipitats;
- um ein Produkt der Reaktion zu erlangen, das eine hybride Polyanilie(PANI)-Verbindung ist, die ausgewählt ist aus der Gruppe bestehend aus: PANI-Hexacyanoferrat(III) und PANI-Silicat.

2. Verfahren nach Anspruch 1, wobei der Anionendonor eine Verbindung ist, die ausgewählt ist aus der Gruppe bestehend aus: Kaliumhexacyanoferrat(III) und Kaliumsilicat.

3. Verfahren nach Anspruch 1 oder 2, wobei der Donor von Eisen(III)-Ionen (Fe³⁺) eine Verbindung ist, die ausgewählt ist aus der Gruppe bestehend aus: Eisen(III)-chlorid-hexahydrat (FeCl₃·6H₂O), Eisen(III)-nitrat-nonahydrat (Fe(NO₃)₃·9H₂O) und Eisen(III)-sulfat-heptahydrat (Fe₂(SO₄)₃·7H₂O).

4. Verfahren nach einem der vorhergehenden Ansprüche, umfassend eine Verwendung von Phosphorsäure in der Menge, die notwendig ist, um die Konzentration in dem Reaktionsgemisch zu erlangen, die von 0,1 bis 6,0 M reicht.

5. Verfahren nach einem der vorhergehenden Ansprüche, umfassend eine Verwendung von Eiswasser als Kühlmittel.

6. Verfahren nach einem der vorhergehenden Ansprüche, umfassend Ausführen der Synthese für eine Stunde.

7. Verfahren nach einem der vorhergehenden Ansprüche, umfassend eine Verwendung von destilliertem Wasser als Spülmittel, um das Präzipitat zu spülen, bis das Filtrat farblos ist.

8. Verfahren nach einem der vorhergehenden Ansprüche, wobei die Temperatur des Trocknungsvorgangs 80 °C beträgt.

9. Organische Beschichtungszusammensetzung, **dadurch gekennzeichnet, dass** sie eine hybride PANI-Verbindung enthält, die ausgewählt ist aus der Gruppe bestehend aus: PANI-Hexacyanoferrat(III) und PANI-Silicat, wobei die hybride PANI-Verbindung durch das Verfahren nach einem der Ansprüche 1-8 erlangbar ist.

10. Organische Beschichtungszusammensetzung nach Anspruch 9, umfassend mindestens eine hybride PANI-Verbindung in der Menge von 0,1 bis 0,5 Gew.-% in Bezug auf das Gesamtgewicht der organischen Beschichtungszusammensetzung.

11. Organische Beschichtungszusammensetzung nach einem der Ansprüche 9-10, die eine Form einer Farbe aufweist.

12. Organische Beschichtungszusammensetzung nach einem der Ansprüche 9-10, die eine Form eines Lacks aufweist.

13. Organische Beschichtungszusammensetzung nach einem der Ansprüche 9-10, die eine Form eines Emails aufweist.

14. Organische Beschichtungszusammensetzung nach einem der Ansprüche 9-13, wobei die hybride PANI-Verbindung ausgewählt ist aus der Gruppe bestehend aus: PANI-Hexacyanoferrat(III) und PANI-Silicat, und wobei die hybride PANI-Verbindung während des Herstellens der organischen Beschichtungszusammensetzung als Pigment eingebracht wird.

15. Organische Beschichtungszusammensetzung nach Anspruch 14, wobei die hybride PANI-Verbindung durch die Emulgierung mit dem Pigment in die organische Beschichtungszusammensetzung eingebracht wird.

## Revendications

1. Procédé de synthèse d'un additif anticorrosion à des compositions de revêtement organiques, comprenant la préparation d'une solution de réaction aqueuse à une température plus basse que la température ambiante, la solution de réaction aqueuse comprenant :
- au moins un acide sélectionné dans le groupe constitué de : acide phosphorique (V), acide sulfurique (VI), acide nitrique (V), acide chlorhydrique, acide fluorhydrique, acide perchlorique ayant une concentration totale dans la solution aqueuse de 0,1 à 8 M ;
- au moins un oxydant sélectionné dans le groupe constitué de : persulfate d'ammonium et peroxyde d'hydrogène ;
- aniline en quantité nécessaire pour obtenir le rapport de poids d'aniline:oxydant de 1:2,5 à 1:5 ;
- et un donneur d'anions en quantité nécessaire pour obtenir le rapport de poids de donneur d'anions: aniline d'au moins 0,1:1 ;
**caractérisé par** :
- pendant la préparation de la solution de réaction aqueuse, l'introduction dans la solution de réaction aqueuse:
- comme donneur d'anions, d'un composé comprenant des anions sélectionnés dans le groupe constitué de : hexacyanoferrates (III) [Fe(CN)₆³⁻] et silicates (SiO₃²⁻) ;
- d'au moins un composé qui est donneur d'ions de fer (III) (Fe³⁺) en quantité nécessaire pour obtenir la concentration d'ions de fer (Fe³⁺) dans le mélange de réaction dans une gamme de 0,05 à 0,15 M ;
- ensuite, l'agitation du mélange de réaction jusqu'à ce que le précipité soit précipité ;
- la filtration et le séchage du précipité ;
- pour obtenir un produit de la réaction qui est un composé de polyaniline (PANI) hybride sélectionné dans le groupe constitué de : hexacyanoferrate de PANI (III) et silicate de PANI.

2. Procédé selon la revendication 1, où le donneur d'anions est un composé sélectionné dans le groupe constitué de : hexacyanoferrate de potassium (III) et silicate de potassium.

3. Procédé selon la revendication 1 ou 2, où le donneur d'ions de fer (III) (Fe³⁺) est un composé sélectionné dans le groupe constitué de : hexahydrate de chlorure de fer (III) (FcCl₃·6H₂O), nonahydrate de nitrate de fer (III) (Fe(NO₃)₃·9H₂O) et heptahydrate de sulfate de fer (III) (Fe₂(SO₄)₃·7H₂O).

4. Procédé selon l'une quelconque des revendications précédentes, comprenant l'utilisation d'acide phosphorique en quantité nécessaire pour obtenir la concentration dans le mélange de réaction allant de 0,1 à 6,0 M.

5. Procédé selon l'une quelconque des revendications précédentes, comprenant l'utilisation d'eau glacée comme agent réfrigérant.

6. Procédé selon l'une quelconque des revendications précédentes, comprenant l'exécution de la synthèse pendant une heure.

7. Procédé selon l'une quelconque des revendications précédentes, comprenant l'utilisation d'eau distillée comme agent de rinçage pour rincer le précipité jusqu'à ce que le filtrat soit incolore.

8. Procédé selon l'une quelconque des revendications précédentes, où la température du procédé de séchage est 80°C.

9. Composition de revêtement organique **caractérisée en ce qu'**elle contient un composé de PANI hybride sélectionné dans le groupe constitué de : hexacyanoferrate (III) de PANI et silicate de PANI, où le composé de PANI hybride peut être obtenu par le procédé de l'une quelconque des revendications 1-8.

10. Composition de revêtement organique selon la revendication 9, comprenant au moins un composé de PANI hybride à raison de 0,1 à 0,5% en poids, par rapport au poids total de la composition de revêtement organique.

11. Composition de revêtement organique selon l'une quelconque des revendications 9-10, qui est sous forme de peinture.

12. Composition de revêtement organique selon l'une quelconque des revendications 9-10, qui est sous forme de vernis.

13. Composition de revêtement organique selon l'une quelconque des revendications 9-10, qui est sous forme d'émail.

14. Composition de revêtement organique selon l'une quelconque des revendications 9-13, où le composé de PANI hybride est sélectionné dans le groupe constitué de : hexacyanoferrate (III) de PANI et silicate de PANI, et où le composé de PANI hybride est introduit comme pigment pendant la préparation de la composition de revêtement organique.

15. Composition de revêtement organique selon la revendication 14, où le composé de PANI hybride est introduit dans la composition de revêtement organique par émulsification avec le pigment.
